Europäisches Patentamt

(19) European Patent Office

Office européen des brevets

(12)

(11) Numéro de publication: **0 013 668**
A1

# DEMANDE DE BREVET EUROPEEN

(21) Numéro de dépôt: 80870002.5

(22) Date de dépôt: 09.01.80

(51) Int. Cl.³: **F 16 K 11/085**
**B 29 F 1/022**

(30) Priorité: 10.01.79 BE 873375

(43) Date de publication de la demande:
23.07.80 Bulletin 80/15

(84) Etats Contractants Désignés:
DE FR GB IT LU NL SE

(71) Demandeur: DUBERNARD HOSPITAL S.A.
Quai de Bacalan 22
F-33300 Bordeaux(FR)

(72) Inventeur: Deckmyn, Jean-Claude
32, Résidence Pontet Lamartine
F-33600 Pessac(FR)

(74) Mandataire: Delaunois, Jacques et al,
c/o S.A. LABAZ N.V. Avenue de Béjar 1
B-1120 Bruxelles(BE)

(54) Nouveau robinet à plusieurs voies et son procédé de fabrication.

(57) Le robinet se caractérise en ce que les voies de connexion (1,3) sont parallèles entre elles.

L'avantage essentiel du robinet réside dans le fait qu'il peut être fabriqué à partir d'un moule comportant de nombreuses empreintes et donc avec un prix de revient très bas.

Fig. 1

EP 0 013 668 A1

0013668

- 1 -

<u>Nouveau robinet à plusieurs voies et son procédé de fabrication.</u>

La présente invention se rapporte d'une manière générale à un nouveau robinet et à son procédé de fabrication.

L'invention se rapporte plus particulièrement à un nouveau robinet comportant au moins trois voies et à son procédé de fabrication par moulage.

Le robinet selon l'invention est de préférence en matière plastique mais peut également être en toute matière susceptible d'être moulée et/ou usinée.

Jusqu'à présent, les robinets comportant trois voies ou plus ont celles-ci placées à angle droit, ces voies étant mises en connexion par rotation du boisseau du robinet, l'arrêt de l'écoulement étant alors obtenu en plaçant les manetons du boisseau selon des positions bien précises.

La réalisation par moulage de tels robinets est assez onéreuse car le moule ne peut contenir au maximum que deux empreintes.

En effet, de par leur disposition à angle droit, les trois voies du corps du robinet occupent dans le moule 180° du plan pour la première empreinte, la deuxième empreinte occupant les 180° restant.

Dans le cas d'un robinet à quatre voies placées perpendiculairement, il est évident que le moule ne pourra contenir qu'une seule empreinte, puisque les quatre voies de connexion occupent les 360° du plan.

Cette limitation dans le nombre d'empreintes par moule se traduit par un prix de revient assez élevé de la fabrication par moulage de robi-

0013668

- 2 -

nets comportant trois ou quatre voies.

Ce prix de revient élevé n'est pas acceptable d'une manière générale, et l'est encore moins pour des robinets destinés à être utilisés dans des appareils ou dispositifs à usage unique, par exemple les appareils stériles utilisés en pratique médicale.

La présente invention a pour but de fournir un robinet comportant au moins trois voies et ne présentant pas ces inconvénients.

Le robinet selon l'invention est caractérisé en ce que lesdites voies de connexion sont placées parallèlement entre elles, toutes les fonctions du robinet étant par ailleurs maintenues.

L'invention sera mieux comprise à l'aide du complément de description ci-dessous et des dessins en annexe.

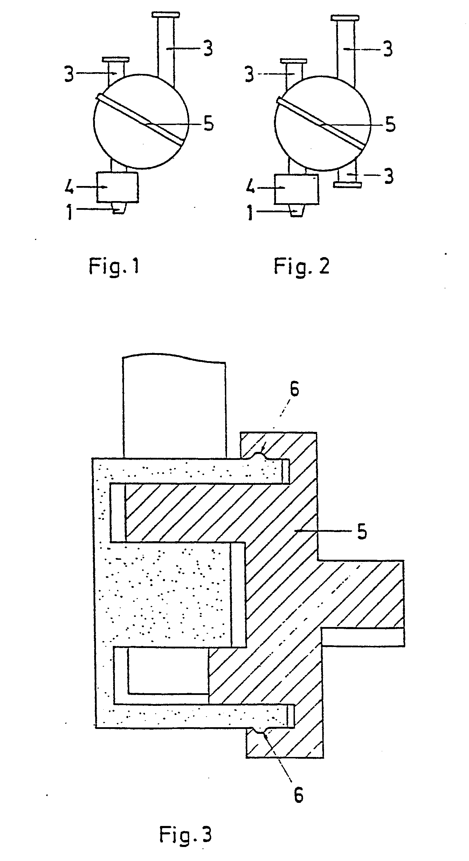

La Figure 1 est une vue de face d'un mode de réalisation d'un robinet comportant trois voies, avec verrouillage mâle d'une voie.

La Figure 2 est une vue de face d'un autre mode de réalisation d'un robinet selon l'invention, ledit robinet comportant quatre voies, avec verrouillage mâle d'une voie.

La Figure 3 est une vue en coupe longitudinale d'un robinet selon l'invention avec partie fixe, partie mobile et clip de fixation.

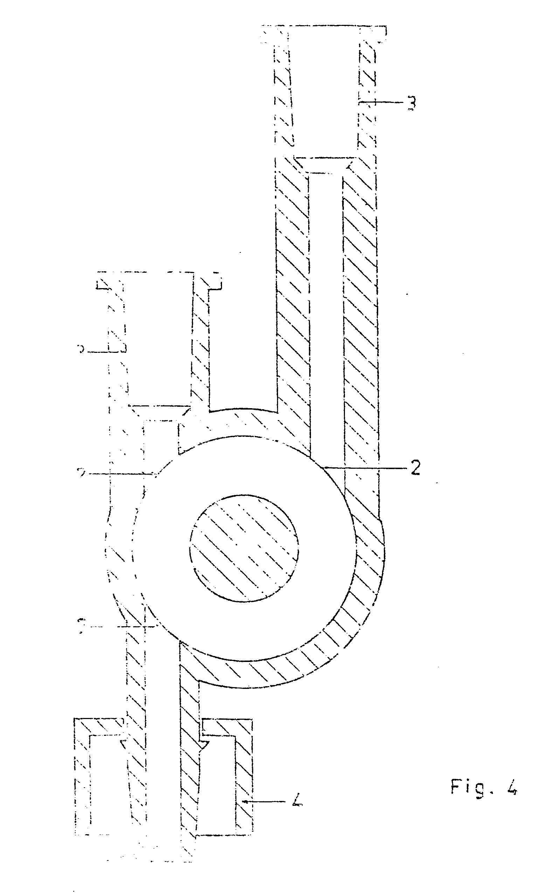

La Figure 4 est une vue de face et en coupe du robinet de la Figure 1.

En se référant aux dessins, on a un robinet comportant une voie de connexion mâle (1), comportant éventuellement un accessoire de verrouillage (4) sur la voie de connexion mâle, deux ou trois voies de connexion femelles (3), toutes ces voies étant parallèles entre elles, des trous d'abouchage (2) des voies de connexion, un boisseau de robinet de type classique (5) et des clips de fixation (6) dudit boisseau.

Comme dit plus haut, le robinet selon l'invention conserve toutes ses fonctions antérieures, son fonctionnement est donc classique et ne sera pas décrit.

Le robinet selon l'invention peut avantageusement être fabriqué par moulage, le moule pouvant contenir un grand nombre d'empreintes.

Cela se traduit par des cadences de fabrication plus élevées et donc par un abaissement appréciable du prix de revient.

- 4 -

Revendications de brevet.

1. Robinet à plusieurs voies de connexion caractérisé en ce que lesdites voies de connexion sont parallèles entre elles.

2. Robinet selon la Revendication 1 caractérisé en ce qu'il comporte trois voies de connexion.

3. Robinet selon la Revendication 1 caractérisé en ce qu'il comporte quatre voies de connexion.

4. Procédé de fabrication par moulage d'un robinet selon la Revendication 2 caractérisé en ce que le moule contient plus de deux empreintes.

5. Procédé de fabrication par moulage d'un robinet selon la Revendication 3 caractérisé en ce que le moule contient plus d'une empreinte.

Fig. 1

Fig. 2

Fig. 3

Fig. 4

**0013668**
Numéro de la demande

**Office européen des brevets**

**RAPPORT DE RECHERCHE EUROPEENNE**

EP 80 87 0002

## DOCUMENTS CONSIDERES COMME PERTINENTS

| Catégorie | Citation du document avec indication, en cas de besoin, des parties pertinentes | Revendication concernee |
|---|---|---|
| X | DE - A - 2 518 784 (DRAYTON CONTROLS)  <br> * Page 6, dernier paragraphe à page 7, premier paragrpahe; figures * | 1,2 |
| | -- | |
| X | AU - A - 1 516/66 (GEIKIE)  <br> * En entier * | 1,2 |
| | -- | |
| X | US - A - 2 604 904 (FLANAGAN)  <br> * Colonne 2, ligne 10-34; figure 3 * | 1,3 |
| | -- | |
| A | US - A - 2 733 479 (ENGLISH)  <br> * Colonne 1, ligne 29-38; figures 1,2 * | |
| | -- | |
| A | US - A - 2 578 492 (SIMPKINS)  <br> * Revendication 1; figures * | |
| | -- | |
| A | US - A - 3 959 871 (REBACK)  <br> * Résumé; figures * | |
| | -- | |
| A | US - A - 3 871 611 (TAKETA)  <br> * Résumé; figures * | |
| | -- | |
| | | /. |

**CLASSEMENT DE LA DEMANDE (Int Cl.³)**

F 16 K 11/085
B 29 F 1/022

**DOMAINES TECHNIQUES RECHERCHES (Int. Cl.³)**

F 16 K
B 29 F
A 61 M

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour o autres raisons
&: membre de la même famille, document correspondant

Le present rapport de recherche a été établi pour toutes les revendications

| Lieu de la recherche | Date d'achevement de la recherche | Examinateur |
|---|---|---|
| La Haye | 01-04-1980 | V. REETH |

OEB Form 1503.1 06.78

**Office européen des brevets**

**RAPPORT DE RECHERCHE EUROPEENNE**

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | <u>FR - A - 2 266 838</u> (BAXTER LABORATORIES) <br> * Revendication 1; figures * | | |
| | ---- | | |
| | | | **DOMAINES TECHNIQUES RECHERCHES (Int. Cl. ³)** |

OEB Form 1503.2 06.78